# EUROPÄISCHE PATENTSCHRIFT

(11) **EP 1 621 233 B1**
(45) Veröffentlichungstag und Bekanntmachung des Hinweises auf die Patenterteilung: **26.02.2020**
(21) Anmeldenummer: 05012395.9
(22) Anmeldetag: 09.06.2005
(51) Int. Cl.: B01D 39/16, B01D 39/18, B01D 39/20, B32B 5/02, B32B 7/14, B32B 5/16, B32B 5/18, B32B 5/26, A62D 5/00

(54) **Textiles Verbundmaterial mit Aktivkohlefasern und Verfahren zu seiner Herstellung**
Composite textile material with activated carbon fibers and method for its manufacture
Matériau textile composite comprenant des fibres de charbon actif et son procédé de fabrication

(30) Priorität: 05.07.2004 DE 102004032563
(43) Veröffentlichungstag der Anmeldung: 01.02.2006
(73) Patentinhaber: Blücher GmbH, 40699 Erkrath (DE)
(72) Erfinder: Heinrich, Peter, Dr., 47447 Moers (DE); Reek, Günter, 51379 Leverkusen (DE); Stoll, Thomas, 72555 Metzingen (DE)
(74) Vertreter: Von Rohr Patentanwälte Partnerschaft mbB

(56) Entgegenhaltungen:
- EP-A- 1 468 732
- WO-A-94/01198
- DE-A1- 4 432 834
- DE-A1- 10 356 776
- US-A- 4 513 047
- US-A- 4 663 780

## Beschreibung

Die vorliegende Erfindung betrifft ein textiles Flächengebilde in Form eines Verbundmaterials, insbesondere zum Schutz gegenüber biologischen und chemischen Schadstoffen und Giften, wie biologischen und chemischen Kampfstoffen, nach dem Oberbegriff des Anspruchs 1 und ein Verfahren zu seiner Herstellung. Des weiteren betrifft die vorliegende Erfindung die Verwendung dieses textilen Flächengebildes für die Herstellung von Schutzmaterialien aller Art, wie z.B. Schutzanzügen, Schutzhandschuhen, Schutzschuhen (z.B. Schutzstiefeln) und anderen Schutzbekleidungsstücken sowie Schutzabdeckungen (z.B. für Krankentransporte), Schlafsäcken und dergleichen, sowohl für den militärischen als auch für den zivilen Bereich, insbesondere für den ABC-Einsatz, sowie die vorgenannten Schutzmaterialien selbst.

Aktivkohle ist aufgrund ihrer recht unspezifischen adsorptiven Eigenschaften das am meisten angewandte Adsorbens. Gesetzliche Auflagen, aber auch das steigende Bewußtsein der Verantwortung für die Umwelt führen zu einem steigenden Bedarf an Aktivkohle. Des weiteren kommt Aktivkohle auch zur Anwendung in Schutzmaterialien gegen chemische und biologische Schadstoffe und Gifte

Aktivkohle wird im allgemeinen durch Carbonisierung (synonym auch als Schwelung oder Pyrolyse bezeichnet) und anschließende Aktivierung kohlenstoffhaltiger Verbindungen bzw. Materialien erhalten, wobei solche Verbindungen bzw. Materialien bevorzugt werden, die zu ökonomisch vernünftigen Ausbeuten führen. Denn die Gewichtsverluste durch Abspalten flüchtiger Bestandteile beim Carbonisieren und durch den Abbrand beim Aktivieren sind erheblich. Während bei der Carbonisierung die Umwandlung des kohlenstoffhaltigen Ausgangsmaterials zu Kohlenstoff erfolgt, d. h. mit anderen Worten das Ausgangsmaterial verkohlt wird, wird bei der nachfolgenden Aktivierung ein gezielter Abbrand der Aktivkohle vorgenommen, um die Porosität zu erhöhen und somit die Zunahme der inneren Oberfläche (Porenvolumen) zu bewirken und folglich die Leistungsfähigkeit der Aktivkohle zu steigern. Die Beschaffenheit der erzeugten Aktivkohle - fein- oder grobporig, fest oder brüchig - hängt auch vom Ausgangsmaterial ab. Übliche Ausgangsmaterialien sind z.B. Kokosnußschalen, Holzabfälle, Torf, Steinkohle, Peche, Polymere, aber auch Kunststoffe, die unter anderem bei der Herstellung von Aktivkohlegeweben eine Rolle spielen. Für weitere Einzelheiten zur Herstellung von Aktivkohle kann beispielsweise verwiesen werden auf H. v. Kienle und E. Bäder, Aktivkohle und ihre industrielle Anwendung, Enke Verlag Stuttgart, 1980.

Aktivkohle wird in verschiedenen Formen verwendet. So kennt man Aktivkohle in Form von Pulverkohle, Splitterkohle, Kornkohle, Formkohle und Kugelkohle sowie in Form von Aktivkohlefasern, insbesondere in Form von Flächengebilden aus Aktivkohlefasern. Solche Aktivkohlefaserflächengebilde kommen beispielsweise bei der Herstellung von Schutzmaterialien aller Art, wie sie zuvor genannt worden sind, zum Einsatz.

Die Herstellung von Aktivkohlefaserflächengebilden ist beispielsweise in der WO-A-98/041678 bzw. der hieraus hervorgehenden EP 0 966 558 B1 bzw. DE 698 09 718 T2 oder in der WO-A-01/70372 und in der DE 196 47 366 A1 beschrieben. Dabei wird im allgemeinen so vorgegangen, daß ein textiles Flächengebilde aus einem geeigneten carbonisierbaren Ausgangsmaterial (z.B. Cellulose, Viskose, Baumwolle, Polyacrylnitril etc.) durch einen Carbonisierungs- und Aktivierungsofen geführt wird, wobei die maximale Bahnbreite des einsetzbaren Ausgangsmaterials durch die Ofendimensionen beschränkt ist. Bei der Carbonisierung mit nachfolgender Aktivierung kommt es zudem zu einer erheblichen Schrumpfung des Materials, so daß das Endprodukt, d.h. das fertige carbonisierte und aktivierte Aktivkohlefaserflächengebilde, im Vergleich zum Ausgangsmaterial eine deutlich geringere Bahnbreite aufweist, wobei, je nach Herstellungsprozeß, Schrumpfungswerte des Endprodukts im Vergleich zum Ausgangsmaterial von bis zu 30 % oder mehr herstellungsbedingt auftreten.

Mit für diese Zwecke üblichen Carbonisierungs- und Aktivierungsöfen können im allgemeinen keine Aktivkohlefaserflächengebildebahnen mit einer Bahnbreite über 120 cm gefertigt werden. Dies führt zu dem entscheidenden Nachteil einer schlechten konfektionstechnischen Ausnutzung von zum Teil unter 60 % dieses Materials, wenn es für die Herstellung der vorgenannten Schutzmaterialien (z.B. ABC-Schutzanzüge und dergleichen) verarbeitet bzw. geschnitten wird.

Die nachveröffentlichte EP 1 468 732 A2 betrifft ein Adsorptionsfiltermaterial zur Herstellung von Schutzmaterialien mit einer ersten Schicht, einer zweiten Schicht und einer zwischen der ersten Schicht und der zweiten Schicht angeordneten Adsorptionsschicht. Die Adsorptionsschicht weist eine erste Aktivkohleschicht mit korn- bzw. kugelförmiger Aktivkohle auf, wobei die erste Aktivkohleschicht zusätzlich Aktivkohlefasern aufweist. Die Adsorptionsschicht kann zudem eine zweite Aktivkohleschicht mit Aktivkohlefasern aufweisen. Die einzelnen Schichten sind aufeinander in verschiedenen Ebenen angeordnet.

Weiterhin betrifft die US 4 513 047 A ein Material zur Herstellung von Schutzbekleidung, welches eine Schicht aus einem Aktivkohlefasergewebe und eine körperseitige hochadsorptive Rayonschicht aufweist, welche zwischen dem Aktivkohlefasergewebe und dem Körper eines Trägers angeordnet ist. Zudem weist das Material eine innerste körperseitige Schicht eines gerippten Textilmaterials auf, welche unterhalb der Aktivkohle und der Rayonschicht angeordnet ist. Das Material kann mehrere Aktivkohlefaserschichten aufweisen. Die Schichten sind vollflächig zueinander und in verschiedenen Ebenen aufeinander angeordnet.

Die WO 94/01198 A1 betrifft ein mehrlagiges, textiles, gasdurchlässiges Filtermaterial, wobei das Filtermaterial eine erste Lage als textile Trägerschicht aufweist, welche mit einer zweiten Lage, die in Form einer flächigen Klebeschicht ausgebildet ist, verbunden ist. Zudem soll das Filtermaterial eine auf der zweiten Lage aufgebrachte und mit dieser flächig verbundene dritte Lage aufweisen, welche eine textile, aktivierte Kohlenstoffasern enthaltende Flächenschicht umfaßt. Die Aktivkohlefaserschicht ist einstückig ausgebildet.

Die US 4 663 780 A betrifft ein Kissen zur Adsorption von Körpergerüchen mit einer filzartigen Aktivkohleschicht und zwei Schichten eines mit kleinen Öffnungen versehenen Materials, wobei die filzartige Aktivkohleschicht zwischen den beiden Schichten des Materials mit den kleinen Öffnungen angeordnet ist.

Die DE 44 32 834 A1 betrifft ein Verfahren zur Emissionsbekämpfung von insbesondere aus Gebäuden stammenden und in die Raumluft abgebbaren Geruchs- und Schadstoffen, wobei die Emissionsquelle direkt mit einem Material abgedeckt wird, das adsorbierende Teilchen enthält. Die adsorbierenden Teilchen sollen einem Verbundmaterial zugeordnet sein, welches eine Trägerschicht aus einem flächigen Trägermaterial, beispielsweise nach Art einer Tapete, aufweist. Dieses Dokument bezieht sich auf den Einsatz von partikulären Adsorbentien.

Die DE 87 00 326 U1 betrifft eine Schutzkleidung zum Schutz des Trägers vor aggressiven oder sonstigen gefährlichen Stoffen mit mindestens einem oberen und einem unteren Materialstück, wobei die Materialsücke an einer Naht zusammengesetzt und aus einem Verbundmaterial hergestellt sind, welches eine vliesartige innere Grundschicht sowie eine glatte äußere Deckschicht aufweist. Die Schutzkleidung soll dabei derart aufgebaut sein, dass die vernähten Ränder der Materialstücke nach oben auf die Innenseite des oberen Materialstücks umgelegt und dort fixiert sind, und zwar derart, dass das obere Materialstück einen U-förmigen Bereich bildet, welcher das untere Materialstück dachziegelartig überlappt.

Es ist nunmehr die Aufgabe der vorliegenden Erfindung, ein Verfahren bzw. ein Material bereitzustellen, das die zuvor geschilderten Nachteile des Standes der Technik zumindest weitgehend vermeidet bzw. abschwächt.

Eine weitere Aufgabe der vorliegenden Erfindung liegt in der Bereitstellung eines Verfahrens, welches die Herstellung von Aktivkohlefaserflächengebilden mit größerer Bahnbreite ermöglicht, so daß eine verbesserte konfektionstechnische Ausnutzung bei der Herstellung der vorgenannten Schutzmaterialien (z.B. Schutzanzüge und dergleichen) ermöglicht wird.

Zur Lösung des zuvor geschilderten Problems schlägt die vorliegende Erfindung ein textiles Flächengebilde in Form eines Verbundmaterials gemäß Anspruch 1 vor. Weitere, vorteilhafte Ausgestaltungen des erfindungsgemäßen textilen Flächengebildes sind Gegenstand der diesbezüglichen Unteransprüche.

Weiterer Gegenstand der vorliegenden Erfindung sind Schutzmaterialien, insbesondere Schutzanzüge, Schutzhandschuhe, Schutzschuhe (z.B. Schutzstiefel) und andere Schutzbekleidungsstücke sowie Schutzabdeckungen (z.B. für Krankentransporte), Schlafsäcke und dergleichen, die unter Verwendung des erfindungsgemäßen textilen Flächengebildes hergestellt sind bzw. das erfindungsgemäße textile Flächengebilde aufweisen. Somit ist Gegenstand der vorliegenden Erfindung auch die Verwendung des erfindungsgemäßen textilen Flächengebildes zur Herstellung der vorgenannten Schutzmaterialien.

Schließlich ist ein weiterer Gegenstand der vorliegenden Erfindung ein Verfahren zur Herstellung des erfindungsgemäßen textilen Flächengebildes gemäß Anspruch 23.

Gegenstand der vorliegenden Erfindung ist - gemäß einem ersten Aspekt der vorliegenden Erfindung - somit ein gas-, wasser- und wasserdampfdurchlässiges textiles Flächengebilde in Form eines Verbundmaterials, insbesondere zum Schutz gegenüber biologischen und chemischen Schadstoffen und Giften, wie biologischen und chemischen Kampfstoffen, welches eine textile Trägerschicht umfaßt, auf die zwei Flächenstücke aus Aktivkohlefasern aufkaschiert sind derart, daß sich Ränder der beiden Aktivkohlefaserflächenstücke berühren bzw. überlappen, wobei die beiden Aktivkohlefaserflächenstücke durch die textile Trägerschicht miteinander verbunden sind und auf diese Weise eine quasi durchgängige, einheitliche Aktivkohlefaserflächenschicht gebildet ist.

Die vorliegende Erfindung betrifft somit ein textiles Flächengebilde, insbesondere zum Schutz gegenüber biologischen und chemischen Schadstoffen und Giften, wie biologischen und chemischen Kampfstoffen, mit einer textilen Trägerschicht und mit einem ersten Flächenstück aus Aktivkohlefasern, welches auf die Trägerschicht aufkaschiert ist,
wobei das Flächengebilde außerdem ein zweites Flächenstück aus Aktivkohlefasern aufweist, welches auf die Trägerschicht aufkaschiert ist derart,
daß sich die jeweils benachbarten Ränder der beiden Flächenstücke berühren, wobei die jeweils benachbarten Ränder entlang der gesamten Berührungslänge bündig aneinander anliegen, oder
daß sich die jeweils benachbarten Ränder der beiden Flächenstücke entlang der gesamten Berührungslänge überlappen, wobei die beiden Flächenstücke zu jeweils 0,1 % bis 20 % ihrer jeweiligen Gesamtfläche miteinander überlappend auf die Trägerschicht aufkaschiert sind, und
wobei die beiden Flächenstücke durch die Trägerschicht miteinander verbunden sind.

Auf diese Weise ist es möglich, Aktivkohlefaserflächengebilde beliebiger Breite zu erzeugen, die aus einzelnen Aktivkohlefaserflächenstücken bestehen bzw. zusammengesetzt sind, deren jeweilige Breite wiederum durch den Herstellungsprozeß vorgegeben bzw. beschränkt ist. Die einzelnen Aktivkohlefaserflächenstücke werden also nahtlos und wirksam über eine textile Trägerschicht miteinander verbunden. An den Übergangsstellen zwischen jeweils zwei Aktivkohlefaserflächenstücken berühren sich die jeweils benachbarten Ränder bzw. Kanten zweier Aktivkohlefaserflächenstücke über die gesamte Berührungslänge, wobei die Berührung der benachbarten Ränder bzw. Kanten zweier Aktivkohlefaserflächenstücke derart ausgebildet sein kann, daß entweder die betreffenden Ränder bzw. Kanten der beiden Aktivkohlefaserflächenstücke bündig aneinander anliegen oder aber überlappen. Auf diese Weise wird eine effiziente Verbindung von zwei oder mehr Flächenstücken aus Aktivkohlefasern zu einem Gesamtaktivkohlefaserflächengebilde beliebig einstellbarer Flächendimension bzw. Flächenausdehnung ermöglicht.

Wenn aus diesem Material dann Schutzmaterialien der zuvor genannten Art hergestellt werden (z.B. Schutzanzüge, Schutzhandschuhe, Schutzschuhe etc.), führt dies zu einer erheblich verbesserten konfektionstechnischen Ausnutzung, insbesondere beim Zuschneiden des Materials bei der Herstellung der zuvor genannten Schutzmaterialien. Insbesondere kann der konfektionstechnische Ausnutzungsgrad - im Vergleich zu den einzelnen Aktivkohlefaserflächenstücken - auf über 90 % gesteigert werden, d.h. mehr als 90 % des erfindungsgemäßen textilen Flächengebildes kann bei seiner Verarbeitung zu den vorgenannten Schutzmaterialien ausgenutzt werden, während nur weniger als 10 % Verschnitt bzw. nicht verwertbares Restmaterial verbleibt. Im Gegensatz hierzu liegt der konfektionstechnische Ausnutzungsgrad bei einzelnen, d.h. nicht miteinander verbundenen Aktivkohlefaserflächenstücken zum Teil nur unter 60 %.

Weitere Vorteile, Eigenschaften, Aspekte und Merkmale der vorliegenden Erfindung ergeben sich aus der folgenden Beschreibung eines in der Zeichnung dargestellten, bevorzugten Ausführungsbeispiels. Es zeigt:

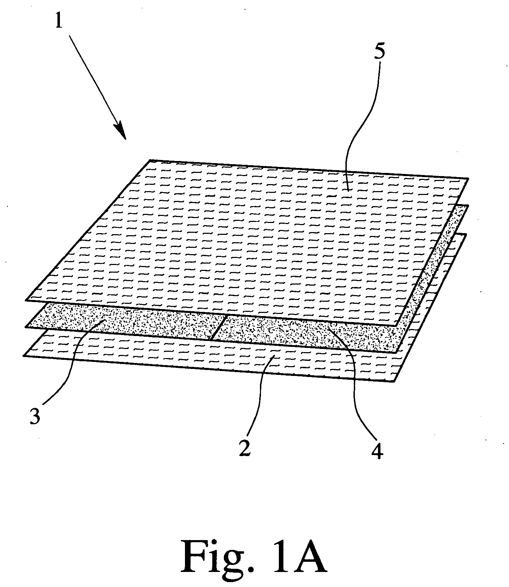

- Fig. 1A: eine schematische, explosionsartige Darstellung eines textilen Flächengebildes nach der vorliegenden Erfindung gemäß einer ersten Ausführungsform, wonach die Ränder der beiden verbundenen bzw. zusammengeführten Flächenstücke aus Aktivkohlefasern einander berühren und bündig zueinander abschließen bzw. bündig aneinander anliegen,

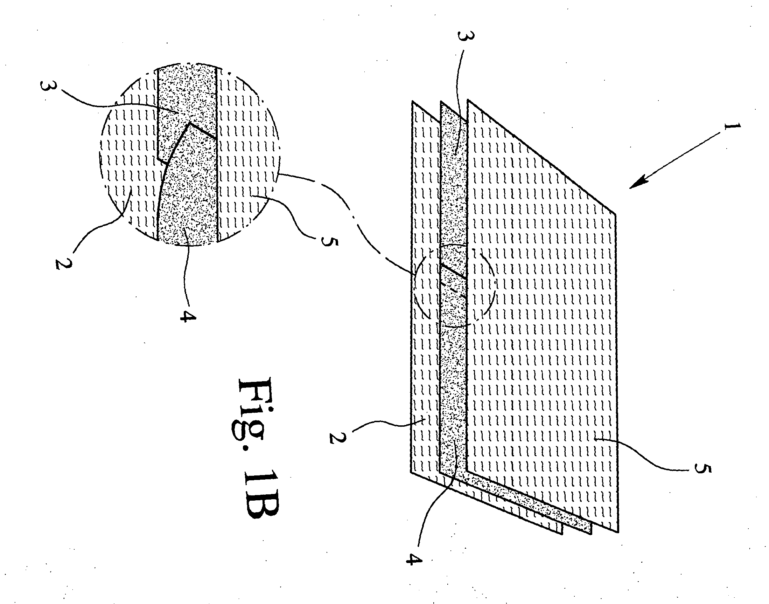

- Fig. 1B: eine schematische, explosionsartige Darstellung eines textilen Flächengebildes nach der vorliegenden Erfindung gemäß einer zweiten, alternativen Ausführungsform, wonach die Ränder der beiden verbundenen bzw. zusammengeführten Flächenstücke aus Aktivkohlefasern miteinander überlappen.

Fig. 1A und 1B zeigen jeweils eine schematische, explosionsartige Darstellung eines textilen Flächengebildes 1 nach der vorliegenden Erfindung. Das erfindungsgemäße textile Flächengebilde 1, welches insbesondere zum Schutz gegenüber biologischen und chemischen Schadstoffen und Giften, wie z. B. biologischen und chemischen Kampfstoffen, geeignet ist, ist in der Art eines textilen Verbundstoffes bzw. Laminats aus einer Mehrzahl von Schichten bzw. Lagen 2, 3, 4, 5 aufgebaut. Das textile Flächengebilde 1 weist eine textile Trägerschicht 2 auf, auf die ein erstes Flächenstück 3 aus Aktivkohlefasern und ein zweites Flächenstück 4 aus Aktivkohlefasern aufkaschiert bzw. auflaminiert ist, d.h. die beiden Aktivkohlefaserflächenstücke 3, 4 sind dauerhaft mit der textilen Trägerschicht 2 verbunden. Das Aufkaschieren bzw. Auflaminieren der beiden Aktivkohlefaserflächenstücke 3, 4 auf die Trägerschicht 2 erfolgt derart, daß einerseits die beiden Flächenstücke 3, 4 durch die Trägerschicht 2 miteinander verbunden sind und andererseits die Ränder bzw. Kanten der beiden Flächenstücke 3, 4 einander berühren und/oder überlappen, vorzugsweise über die gesamte Länge der berührenden bzw. überlappenden Ränder bzw. Kanten.

Unter dem Begriff "Kaschieren" - erfindungsgemäß synonym auch als "Laminieren" bezeichnet - wird insbesondere das Verbinden von zwei oder mehr Lagen oder Schichten mit Hilfe geeigneter Kaschiermittel (z.B. Klebstoffe) verstanden (vgl. Römpp, Chemielexikon, 10. Auflage, Band 3, 1997, Georg Thieme Verlag Stuttgart/New York, Seite 2088, Stichwort: "Kaschieren").

Gemäß einer ersten Ausführungsform, wie sie in Fig. 1A dargestellt ist, berühren sich die beiden Flächenstücke 3, 4 derart, daß ihre betreffenden Ränder bzw. Kanten entlang der gesamten Berührungslänge bündig aneinander anliegen, d.h. keine Lücke zwischen den beiden über die Trägerschicht 2 verbundenen Flächenstücke 3, 4 entsteht. Auf diese Weise entsteht eine einheitliche, durchgehende Aktivkohlefaserflächenschicht aus den beiden Flächenstücken 3, 4. Damit gewährleistet ist, daß die beiden Flächenstücke 3, 4 entlang der gesamten Länge der sich jeweils berührenden Ränder bzw. Kanten bündig bzw. dicht aneinanderliegen, werden die beiden Flächenstücke 3, 4 vorzugsweise unmittelbar vor ihrer Aufkaschierung auf die Trägerschicht 2 zugeschnitten, so daß die aneinanderliegenden Ränder bzw. Kanten der Aktivkohlefaserflächenstücke 3, 4 zueinander kompatibel sind und bündig aneinander angrenzen bzw. anliegen.

Gemäß einer zweiten, alternativen Ausführungsform, wie sie in Fig. 1B dargestellt ist, erfolgt das Aufkaschieren der Aktivkohlefaserflächenstücke 3, 4 auf die textile Trägerschicht 2 derart, daß die aneinander angrenzenden Ränder bzw. Kanten der beiden Flächenstücke 3, 4 überlappen, wobei die Flächenstücke 3, 4 gleichzeitig dauerhaft mit der textilen Trägerschicht 2 verbunden sind und über diese Trägerschicht 2 miteinander verbunden sind. In der Ausschnittvergrößerung des markierten Bereichs von Fig. 1B ist eine Ecke des Flächenstücks 4 nur zu Zwecken der Veranschaulichung als hochgeklappt dargestellt; selbstverständlich liegt im fertigen Material 1 selbst diese Ecke des Flächenstücks 4 unmittelbar auf dem Flächenstück 3 flächig auf. Denn auch bei dieser Ausführungsform entsteht eine einheitliche, durchgängige Aktivkohlefaserflächenschicht, welche aus den beiden Aktivkohlefaserflächenstücken 3, 4 zusammengesetzt ist. Bei dieser Ausführungsform können die beiden Flächenstücke 3, 4 im Überlappungsbereich zusätzlich miteinander verbunden sein, insbesondere durch Verklebung, vorzugsweise durch punktförmigen, diskontinuierlichen Klebstoffauftrag in Form von nichtzusammenhängenden Kleberpunkten, wie nachfolgend noch beschrieben. Bei dieser Ausführungsform ist es vorgesehen, daß die beiden überlappenden Flächenstücke 3, 4 zu jeweils 0,1 % bis 20 %, insbesondere 0,1 % bis 10 %, vorzugsweise 0,1 % bis 5 %, ihrer jeweiligen Gesamtfläche miteinander überlappen; auf diese Weise ist einerseits eine gute Verbindung der beiden Flächenstücke 3, 4 zu einer durchgehenden Aktivkohlefaserflächenschicht gewährleistet, und andererseits geht durch die relativ geringe Überlappung nicht übermäßig viel Material verloren.

Bei beiden Ausführungsformen, wie sie zuvor geschildert worden und in den Fig. 1A und 1B dargestellt sind, sind die beiden Flächenstücke 3, 4 durch die textile Trägerschicht 2 miteinander verbunden. Im allgemeinen resultiert eine nahtlose Verbindung der beiden Flächenstücke 3, 4 zu einer durchgängigen Aktivkohlefaserschicht.

Das Aufkaschieren der beiden Flächenstücke 3, 4 auf die Trägerschicht 2 erfolgt vorteilhafterweise durch Verklebung. Vorzugsweise erfolgt die Verklebung jeweils durch einen diskontinuierlichen Klebstoffauftrag in Form von nichtzusammenhängenden Kleberpunkten. Der Begriff "Kleberpunkte" bezeichnet erfindungsgemäß insbesondere sehr kleine Klebstofftröpfchen oder -häufchen, die auf die zu verklebenden Lagen bzw. Schichten aufgebracht sind, und zwar ohne einander zu berühren.

Gemäß einer besonderen Ausgestaltung der vorliegenden Erfindung, wie sie in den Fig. 1A und 1B dargestellt ist, kann auf die der textilen Trägerschicht 2 jeweils gegenüberliegenden Seiten des ersten sowie des zweiten Flächenstücks 3, 4 außerdem eine textile Abdeckschicht 5 aufkaschiert bzw. auflaminiert sein. Vorzugsweise sind die beiden Flächenstücke 3, 4 mit dieser Abdeckschicht 5 verklebt. Dies geschieht insbesondere durch jeweils einen diskontinuierlichen Klebstoffauftrag in Form von nichtzusammenhängenden Kleberpunkten, wie zuvor beschrieben. Bei dieser besonderen Ausgestaltung der vorliegenden Erfindung sind die beiden Flächenstücke 3, 4 zusätzlich durch die Abdeckschicht 5 miteinander verbunden. Das Vorhandensein einer Abdeckschicht 5 hat den Vorteil, daß einerseits die Verbindung der beiden Aktivkohlefaserflächenstücke 3, 4 stabilisiert wird und andererseits die beiden Aktivkohlefaserflächenstücke 3, 4 bei ihrer Verwendung, insbesondere in Schutzmaterialien, wie z. B. Schutzanzügen, vor übermäßiger Beanspruchung geschützt werden, so daß die Aktivkohlefasern im wesentlichen keinem übermäßigem Abrieb ausgesetzt sind.

Vorzugsweise sind die beiden Flächenstücke 3 und 4 jeweils, jeweils bezogen auf eine Seite der Flächenstücke 3 und 4, zu höchstens 30 %, insbesondere zu höchstens 25 %, vorzugsweise zu höchstens 20 %, ganz besonders bevorzugt zu höchstens 15 %, mit Klebstoff bedeckt, um eine gute Verbindung mit der textilen Trägerschicht 2 und der gegebenenfalls vorhandenen Abdeckschicht 5 bei gleichzeitig guter Gas-, Wasser- und Wasserdampfdurchlässigkeit zu gewährleisten. Mit anderen Worten ist jede der beiden Seiten bzw. Oberflächen der Aktivkohlefaserflächenstücke 3 und 4 zu mindestens 70 %, insbesondere zu mindestens 75 %, vorzugsweise zu mindestens 80 %, ganz besonders bevorzugt zu mindestens 85 %, frei von Klebstoff und somit für die zu adsorbierenden biologischen und chemischen Schadstoffe und Gifte frei zugänglich. Auf diese Weise wird einerseits eine gute Adsorptionseffizienz und -kapazität und andererseits eine gute Gas-, Wasser- und Wasserdampfdurchlässigkeit gewährleistet. Dennoch ist der Verbund ausreichend stabil, um den mechanischen Beanspruchungen bei seiner Verwendung, insbesondere beim Tragen von Schutzanzügen, standzuhalten. Im allgemeinen genügt es zur Herstellung eines stabilen und mechanisch belastbaren Verbunds, daß der Klebstoff in solchen Mengen aufgetragen ist, daß er die beiden Flächenstücke 3 und 4 jeweils, jeweils bezogen auf eine Seite bzw. Oberfläche der Flächenstücke 3 und 4, zu 5 % bis 30 %, insbesondere zu 10 % bis 25 %, vorzugsweise zu 10 % bis 20 %, bedeckt. Auf diese Weise wird auch eine gute Gas-, Wasser- und Wasserdampfdurchlässigkeit erreicht, was insbesondere bei der Verwendung des erfindungsgemäßen textilen Flächengebildes 1 in Schutzanzügen und anderen Schutzbekleidungsstücken deren Tragekomfort erhöht.

Zu diesem Zweck wird der Klebstoff, jeweils bezogen auf eine Seite der Flächenstücke 3 und 4, im allgemeinen mit einem Flächengewicht (Trockengewicht) von jeweils 5 bis 30 g/m², insbesondere 5 bis 25 g/m², vorzugsweise 10 bis 20 g/m², aufgetragen. Die vorgenannten Angaben beziehen sich auf jeweils eine der beiden Seiten bzw. Oberflächen der Aktivkohlefaserflächenstücke 3 und 4; der Gesamtklebeauftrag, bezogen jeweils auf das gesamte Flächenstück 3 oder 4, d.h. auf beide Seiten bzw. beide Oberflächen der Flächenstücke 3 oder 4, ist folglich doppelt so hoch.

Vorteilhafterweise ist der Klebstoff auf die textile Trägerschicht 2 und/oder die Flächenstücke 3, 4 und/oder die gegebenenfalls vorhandene Abdeckschicht 5 aufgedruckt, insbesondere in Form eines regelmäßigen oder unregelmäßigen Rasters oder Musters, vorzugsweise in Form eines unregelmäßigen, insbesondere computerberechneten Rasters oder Musters derart, daß im Gebrauchszustand des textilen Flächengebildes 1 eine Gassenbildung und somit ein Durchschlagen von biologischen und chemischen Schadstoffen und Giften durch das textile Flächegebilde 1 bzw. die Aktivkohlefaserschicht 3, 4 vermieden wird. Im allgemeine können derartige Raster bzw. Muster für den Klebstoffauftrag computerunterstützt bzw. computergesteuert berechnet und aufgetragen werden (sogenanntes CP-Klebstoffraster bzw. Computer-Point-Klebstoffraster). Dies ist dem Fachmann an sich bekannt. Der Auftrag des Klebstoffs auf die textile Trägerschicht 2 und/oder die Flächenstücke 3, 4 und/oder die gegebenenfalls vorhandene Abdeckschicht 5 in Form eines unregelmäßigen Rasters bzw. Musters hat zudem den Vorteil, daß ein in optischer Hinsicht unerwünschter sogenannter Moire-Effekt des resultierenden verklebten Materials vermieden wird.

Der Klebstoff zur Fixierung der Aktivkohlefaserflächenstücke 3, 4 an die textile Trägerschicht 2 bzw. an die gegebenenfalls vorhandene Abdeckschicht 5 kann beispielsweise durch eine Schablone aufgedruckt sein, deren lichter Durchmesser der Löcher für den Klebstoffauftrag 5 bis 1.000 µm, insbesondere 100 bis 575 µm, vorzugsweise 100 bis 300 µm, beträgt; dies ist der kleinste Durchmesser der Löcher der Schablone, durch die der Klebstoff beim Auftragen durch die Schablone hindurchgedrückt ist. Aufgrund der Eigenschaften des Klebstoffes, insbesondere dessen Viskosität, und der Eigenschaften der zu verklebenden Substrate (d. h. textile Trägerschicht 2, Aktivkohlefaserflächenstücke 3, 4 und gegebenenfalls Abdeckschicht 5), insbesondere deren Oberflächenspannung und deren Benetzbarkeit mit dem Kleber, sowie aufgrund des Anpreßdrucks, mit dem die einzelnen Schichten zu einem Verbund kaschiert bzw. laminiert werden, sind die auf den zu verklebenden Substraten bzw. Schichten im fertigen textilen Flächengebilde 1 vorhandenen Kleberpunkte deutlich größer als der lichte Durchmesser der Löcher der Auftragsschablone; die Größe der Kleberpunkte im fertigen Material 1 kann in weiten Bereichen variieren, und im allgemeinen liegt sie im Bereich von 100 bis 10.000 µm, insbesondere 500 bis 5.000 µm, bezogen auf den mittleren Durchmesser eines Klebstoffpunktes.

Der Klebstoffauftrag kann aber grundsätzlich auch mit jeder anderen geeigneten, dem Fachmann geläufigen Methode erfolgen, welche insbesondere zu einem diskontinuierlichen, vorzugsweise punktförmigen Klebstoffauftrag führt. Beispielsweise kann der Klebstoffauftrag mittels Gravurwalzenauftrag oder aber auch im sogenannten "Double-Spot-Verfahren" oder dergleichen erfolgen.

Was den zur Verklebung verwendeten Klebstoff als solchen anbelangt, so kommen alle dem Fachmann an sich bekannten, für diese Zwecke verwendbaren Klebstoffe in Betracht. Besonders geeignet sind thermoplastische Klebstoffe. Ebenfalls besonders geeignet sind reaktive, insbesondere isocyanatreaktive Klebstoffe, die nach dem Vernetzen und Aushärten zu polyurethanbasierten Verklebungen führen. Besonders geeignet sind auch Kombinationen verschiedener Klebstoffe, welche beispielsweise nacheinander appliziert bzw. aufgetragen werden können; auf diese Weise lassen sich die Eigenschaften verschiedener Klebstoffe in einem einzigen Material miteinander vereinen.

Die erfindungsgemäß eingesetzten Aktivkohlefaserflächenstücke 3, 4 sind im allgemeinen Aktivkohlefaserflächengebilde. Bei diesen Aktivkohlefaserflächengebilden kann es sich beispielsweise um Gewebe, Gewirke, Gestricke, Gelege, Vliese, Non-Wovens oder Verbundstoffe jeweils aus Aktivkohlefasern handeln. Bevorzugterweise werden als Aktivkohlefaserflächengebilde für die Flächenstücke 3, 4 Aktivkohlefasergewebe eingesetzt; dies führt zu den erfindungsgemäß besten Ergebnissen.

Die Aktivkohlefaserflächengebilde der Flächenstücke 3, 4 können in ihren Flächengewichten in weiten Bereichen variieren. Im allgemeinen kommen Aktivkohlefaserflächengebilde mit Flächengewichten von 50 bis 250 g/m², insbesondere 50 bis 200 g/m², vorzugsweise 80 bis 180 g/m², besonders bevorzugt 90 bis 150 g/m², zum Einsatz. Hierbei werden üblicherweise Aktivkohlefaserflächengebilde mit einer Dicke von 0,1 bis 10 mm, insbesondere 0,2 bis 0,8 mm, vorzugsweise 0,3 bis 0,5 mm, verwendet.

Besonders gute mechanische Stabilitäten bei gleichzeitig hoher Adsorptionskapazität bzw. -effizienz werden erreicht, wenn die Aktivkohlefasern des ersten und/oder des zweiten Flächenstücks 3, 4 aus carbonisierter und aktivierter Cellulose oder Viskose und/oder carbonisiertem und aktiviertem Polyacrylnitril bestehen; besonders gute Ergebnisse werden mit Aktivkohlefasern aus carbonisiertem und aktiviertem Polyacrylnitril erzielt, welche die beste mechanische Stabilität gewährleisten.

Die mechanische Stabilität der Aktivkohlefaserflächengebilde der Flächenstücke 3, 4 kann noch dadurch gesteigert werden, daß die Aktivkohlefaserflächengebilde aus sogenannten Filamentfasern, d.h. aus nichtgesponnenen Endlosfasern, bestehen. Unter dem Begriff der Filament- bzw. Endlosfasern versteht man insbesondere auf chemisch-technischem Wege nach verschiedenen Verfahren erzeugte, praktisch endlose Fasern als Bestandteil von Textilerzeugnissen entsprechend DIN 60 001 T1 2 (10/1990); für weitere diesbezügliche Einzelheiten kann beispielsweise auf Römpp Chemielexikon, 9. Auflage, Band 2, 1997, Seite 1336, Stichwort: "Filament", verwiesen werden. Zwar können erfindungsgemäß grundsätzlich auch Aktivkohlespinnfasern zur Anwendung kommen, jedoch sind aus den vorgenannten Gründen, insbesondere aufgrund der verbesserten mechanischen Stabilität, Filamentfasern erfindungsgemäß bevorzugt.

Die mechanische Stabilität der Aktivkohlefaserflächenstücke 3, 4 kann noch dadurch verbessert werden, daß die Aktivkohlefasern einen Titer (synonym auch als Feingehalt oder Feinheitsgrad bezeichnet), berechnet als Gewichtsangabe pro Länge, von mindestens 0,9 Denier, insbesondere von mindestens 1,0 Denier, vorzugsweise von mindestens 1,1 Denier, bevorzugt im Bereich von 0,8 bis 1,2 Denier, besonders bevorzugt im Bereich von 1,0 bis 1,2 Denier, aufweisen.

Zu Gewährleistung einer guten mechanischen Stabilität weisen die Aktivkohlefasern der Flächenstücke 3, 4 im allgemeinen ein längenbezogenes Gewicht im Bereich von 1,0 bis 2,0 g/m, insbesondere 1,2 bis 1,8 g/m, vorzugsweise 1,4 bis 1,6 g/m, auf.

Bevorzugterweise besitzen die Aktivkohlefasern der Flächenstücke 3, 4 eine Zugstärke bzw. Reißfestigkeit von mehr als 1,6 g/Denier, vorzugsweise von mehr als 1,8 g/Denier. Bevorzugt liegt die Bruchdehnung bzw. die maximale Dehnbarkeit der Aktivkohlefasern der Flächenstücke 3, 4 bei mehr als 8 %, bezogen auf ihre Eigenlänge. Dies gewährleistet eine gute mechanische Belastbarkeit.

Zu Zwecken der Erhöhung des Tragekomforts einerseits und zu Zwecken der Verbesserung der Dehn- bzw. Belastbarkeitseigenschaften der Aktivkohlefasern der Flächenstücke 3, 4 und somit des gesamten erfindungsgemäßen textilen Flächengebildes 1 andererseits besitzen die Aktivkohlefasern einen gewissen Feuchtigkeitsgehalt, der im allgemeinen 5 bis 15 %, bezogen auf das Aktivkohlefasergewicht, beträgt.

Aus den vorgenannten Gründen ist es bevorzugt, wenn die Aktivkohlefasern der Flächenstücke 3, 4 eine Dichte von mindestens 1,2 g/cm³, insbesondere von mindestens 1,3 g/cm³, insbesondere von mindestens 1,4 g/cm³, und von bis zu 2,0 g/cm³, aufweisen.

Um auch für den militärischen Einsatz besonders geeignet zu sein, ist es vorteilhaft, wenn die Aktivkohlefasern der Flächenstücke 3, 4 nur schwer entflammbar sind, insbesondere einen sogenannten Limited Oxygen Index (L.O.I.) von mindestens 50 % aufweisen. Die flammhemmenden Eigenschaften können noch dadurch verstärkt werden, daß den Aktivkohlefasern entweder flammhemmende Substanzen zugesetzt oder aber die Aktivkohlefasern flammhemmend imprägniert sein können.

Um eine gute Adsorptionsleistung bzw. -effizienz zu gewährleisten, sollten die Aktivkohlefasern der Flächenstücke 3, 4 eine innere Oberfläche (BET) von mindestens 800 m²/g, insbesondere von mindestens 900 m²/g, vorzugsweise von mindestens 1.000 m²/g, bevorzugt im Bereich von 800 bis 2.000 m²/g, insbesondere im Bereich von 1.000 bis 1.500 m²/g, aufweisen.

Erfindungsgemäß als Flächenstücke 3, 4 geeignete Aktivkohlefaserflächengebilde, welche die zuvor genannten Eigenschaften aufweisen, sind im Handel erhältlich. Beispielsweise werden erfindungsgemäß geeignete Aktivkohlefaserflächengebilde von den Firmen CCTeks bzw. Challenge Carbon Technology Co., Ltd. und TCT Taiwan Carbon Technologies, Taiwan, vertrieben.

Erfindungsgemäß geeignete Aktivkohlefaserflächengebilde können auch nach der WO-A-98/041678 bzw. der hieraus hervorgehenden EP 0 966 558 B1 bzw. DE 698 09 718 T2 oder nach der WO-A-01/70372 hergestellt werden, wobei der gesamte Offenbarungsgehalt der vorgenannten Druckschriften hiermit durch Bezugnahme eingeschlossen ist.

Zur Erhöhung der Adsorptionseffizienz bzw. -leistung besteht die Möglichkeit, daß die Aktivkohlefasern der Flächenstücke 3, 4 mit mindestens einem Katalysator imprägniert sind. Erfindungsgemäß geeignete Katalysatoren sind beispielsweise Enzyme und/oder Metalle, insbesondere Metallionen, vorzugsweise Kupfer-, Silber-, Cadmium-, Platin-, Palladium-, Zink- und/oder Quecksilberionen. Die Menge an Katalysator(en) kann in weiten Bereichen variieren; im allgemeinen beträgt die Menge an Katalysator(en) 0,05 bis 12 Gew.-%, vorzugsweise 1 bis 10 Gew.-%, besonders bevorzugt 2 bis 8 Gew.-%, bezogen auf die Aktivkohlefasern.

Was die textile Trägerschicht 2 und die gegebenenfalls vorhandene Abdeckschicht 5 des erfindungsgemäßen textilen Flächengebildes 1 anbelangt, so sind diese im allgemeinen als textile Trägerschichten bzw. als Textilien, insbesondere als textile Flächengebilde, ausgebildet. Der Begriff "textil" bzw. "Textilien" wird erfindungsgemäß in diesem Zusammenhang und in der gesamten Beschreibung sehr weit verstanden, insbesondere im Sinne der DIN 60000: 1969-01. Für weitere diesbezügliche Einzelheiten kann beispielsweise verwiesen werden auf Römpp Chemielexikon, 10. Auflage, Band 6, 1999, Seiten 4477 bis 4483, insbesondere Stichworte: "Textilien", "Textilfasern" und "Textilverbundstoffe".

Beispiele für als textile Trägerschicht 2 bzw. textile Abdeckschicht 5 verwendbare textile Flächengebilde sind z.B. textile Gewebe, Gewirke, Gestricke, Gelege, Vliese, Non-Wovens, Textilverbundstoffe und dergleichen. Dabei können die Trägerschicht 2 und die Abdeckschicht 5 gleiche oder unterschiedliche Flächengewichte aufweisen.

Die Flächengewichte der Trägerschicht 2 und der gegebenenfalls vorhandenen Abdeckschicht 5 können in weiten Bereichen variieren; im allgemeinen liegen ihre Flächengewichte im Bereich von 10 bis 100 g/m², insbesondere 15 bis 75 g/m². Hierdurch wird das Flächengewicht des textilen Flächengebildes 1 insgesamt deutlich reduziert.

Gemäß einer bevorzugten Ausgestaltung sind die textile Trägerschicht 2 und die gegebenenfalls vorhandene Abdeckschicht 5 jeweils als leichte Textilvliese mit Flächengewichten von etwa 25 bis etwa 35 g/m² ausgebildet.

Wie zuvor beschrieben, sind die textile Trägerschicht 2 sowie die Aktivkohlefaserflächenstücke 3, 4 und die Abdeckschicht 5 wasser- und wasserdampfdurchlässig sowie gasdurchlässig, insbesondere luftdurchlässig, ausgebildet und aufgrund des punktförmigen Kleberauftrags zur Fixierung der einzelnen Schichten auch das textile Flächengebilde 1 insgesamt. Insbesondere bei der Herstellung von Schutzmaterialien, wie Schutzbekleidungsstücken, ausgehend von dem erfindungsgemäßen textilen Flächengebilde 1 wird auf diese Weise ein erhöhter Tragekomfort erzielt.

Durch die erfindungsgemäß vorgesehene Kaschierung der Aktivkohlefaserflächenstücke 3, 4 auf die textile Trägerschicht 2 lassen sich durchgängige bzw. kontinuierliche Aktivkohlefaserflächengebilde beliebiger Flächenausdehnung bzw. -dimension, insbesondere beliebiger Breite, erzeugen. Dies ist insbesondere bei der Weiterverarbeitung der erfindungsgemäßen textilen Flächengebilde 1 von großem Vorteil: Bei der Herstellung von Schutzmaterialien, beispielsweise Schutzbekleidungsstücken, wie Schutzanzügen, ausgehend von den erfindungsgemäßen textilen Flächengebilden 1 kommt es zu einer verbesserten konfektionstechnischen Ausnutzung, insbesondere beim Zuschneiden der einzelnen Stücke. Der konfektionstechnische Ausnutzungsgrad läßt sich auf diese Weise auf über 90 % steigern, während bei üblichen Aktivkohlefaserflächengebildebahnen des Standes der Technik eine relativ schlechte konfektionstechnische Ausnutzung von zum Teil nur unter 60 % erreicht wird.

Ausgehend von dem erfindungsgemäßen textilen Flächengebilde 1 lassen sich also großflächig und nahtfrei Aktivkohlefaserflächengebilde beliebiger Flächendimensionierung herstellen.

Das erfindungsgemäße textile Flächengebilde 1 läßt sich insbesondere zur Herstellung von Schutzmaterialien aller Art, insbesondere von Schutzanzügen, Schutzhandschuhen, Schutzschuhen (z. B. Schutzstiefeln) und anderen Schutzbekleidungsstücken und von Schutzabdeckungen und Schlafsäcken und dergleichen, insbesondere für zivile und militärische Zwecke, vorzugsweise für den ABC-Einsatz, verwenden. Gegenstand der vorliegenden Erfindung sind somit auch die auf diese Weise erzeugten Schutzmaterialien selbst.

Weiterer Gegenstand der vorliegenden Erfindung ist ein Verfahren zur Herstellung eines insbesondere wie zuvor geschildert ausgebildeten textilen Flächengebildes, insbesondere zum Schutz gegenüber biologischen und chemischen Schadstoffen und Giften, wie biologischen und chemischen Kampfstoffen, wobei ein erstes bahnförmiges Flächengebilde aus Aktivkohlefasern und ein zweites bahnförmiges Flächengebilde aus Aktivkohlefasern hergestellt und auf eine textile Trägerschicht aufkaschiert werden, wobei das zweite bahnförmige Flächengebilde aus Aktivkohlefasern quer zur Längserstreckung versetzt zum ersten Flächengebilde auf die textile Trägerschicht aufkaschiert wird, so daß sich Längsränder der beiden bahnförmigen Aktivkohlefaserflächengebilde berühren bzw. miteinander überlappen und die beiden bahnförmigen Aktivkohlefaserflächengebilde durch die textile Trägerschicht miteinander verbunden werden. Im allgemeinen erfolgt das Aufkaschieren der beiden Bahnen aus Aktivkohlefasern auf die textile Trägerschicht gleichzeitig, weil dies eine lückenlose Zusammenführung der beiden Bahnen auf dem Trägermaterial gewährleistet.

Die vorliegende Erfindung betrifft somit weiterhin ein Verfahren zur Herstellung eines insbesondere nach einem der vorangehenden Ansprüche ausgebildeten textilen Flächengebildes, insbesondere zum Schutz gegenüber biologischen und chemischen Schadstoffen und Giften, wie biologischen und chemischen Kampfstoffen, wobei ein erstes bahnförmiges Flächengebilde aus Aktivkohlefasern hergestellt und auf eine textile Trägerschicht aufkaschiert wird,
wobei ein zweites bahnförmiges Flächengebilde aus Aktivkohlefasern hergestellt und auf die textile Trägerschicht quer zur Längsersteckung versetzt zum ersten bahnförmigen Flächengebilde aufkaschiert wird,
so daß sich die jeweils benachbarten Längsränder der beiden bahnförmigen Flächengebilde berühren, wobei die jeweils benachbarten Längsränder entlang der gesamten Berührungslänge bündig aneinander anliegen, oder
so daß sich die jeweils benachbarten Längsränder der beiden bahnförmigen Flächengebilde entlang der gesamten Berührungslänge überlappen, wobei die beiden Flächengebilde zu jeweils 0,1 % bis 20 % ihrer jeweiligen Gesamtfläche miteinander überlappend auf die Trägerschicht aufkaschiert werden, und
wobei die beiden bahnförmigen Flächengebilde durch die textile Trägerschicht miteinander verbunden werden.

Für weitere Einzelheiten zu dem erfindungsgemäßen Verfahren kann auf obige Ausführungen zu dem erfindungsgemäßen textilen Flächengebilde verwiesen werden, welche in bezug auf das erfindungsgemäße Verfahren entsprechend gelten.

Entsprechend den beiden Ausführungsformen bzw. Ausgestaltungsformen des textilen Flächengebildes nach der vorliegenden Erfindung kann das erfindungsgemäße Verfahren nach zwei Ausführungsformen bzw. Varianten durchgeführt werden:
Nach einer ersten Ausführungsform des erfindungsgemäßen Verfahrens werden die beiden bahnförmigen Flächengebilde aus Aktivkohlefasern derart zusammengeführt bzw. auf die textile Trägerschicht aufkaschiert bzw. auflaminiert, daß sie sich entlang ihrer Kanten bzw. Ränder berühren, jedoch nicht überlappen, d.h. entlang ihrer Berührungskanten bzw. -ränder bündig aneinander anliegen. Um dies zu erreichen, ist es vorteilhaft, wenn die beiden zu verbindenden bahnförmigen Aktivkohlefaserflächengebilde unmittelbar vor ihrer Aufkaschierung auf die textile Trägerschicht zugeschnitten werden derart, daß die sich berührenden Kanten bzw. Ränder der beiden bahnförmigen Flächengebilde zueinander kompatibel sind. Dies kann beispielsweise dadurch geschehen, daß die beiden bahnförmigen Flächengebilde aus Aktivkohlefasern zunächst geringfügig überlappend zusammengeführt werden und unmittelbar vor ihrer Aufkaschierung auf die textile Trägerschicht der Überlappungsbereich derart eingeschnitten wird, daß die Berührungskanten bzw. -ränder der zusammenzuführenden beiden bahnförmigen Flächengebilde in bezug zueinander kompatibel sind bzw. bündig aneinander anliegen.

Die zweite, verfahrenstechnisch ein wenig einfacher durchzuführende Variante besteht darin, die beiden bahnförmigen Aktivkohlefaserflächenstücke derart unmittelbar vor der Kaschierung auf die textile Trägerschicht zusammenzuführen, daß sie entlang ihrer berührenden Ränder bzw. Kanten überlappen und überlappend auf die textile Trägerschicht aufkaschiert werden, so daß sie auch im resultierenden Endprodukt überlappend auf die textile Trägerschicht aufkaschiert verbleiben. Im Vergleich zu der ersten Ausführungsform des erfindungsgemäßen Verfahrens bietet die zweite Ausführungsform des erfindungsgemäßen Verfahrens den Vorteil, daß die beiden zusammenzuführenden Bahnstücke vor dem Aufkaschieren nicht zurechtgeschnitten werden zu brauchen, so daß ein Arbeitsgang bzw. Verfahrensschritt entfällt. Für weitere diesbezügliche Einzelheiten kann auf obige Ausführungen in bezug auf das erfindungsgemäße textile Flächengebilde verwiesen werden, die hier entsprechend gelten.

Nach Aufkaschieren der beiden bahnförmigen Flächengebilde aus Aktivkohlefasern auf die textile Trägerschicht kann - gegebenenfalls nach Aufkaschierung einer zusätzlichen Abdeckschicht auf die der Trägerschicht gegenüberliegenden Seite der bahnförmigen Flächengebilde - das resultierende Material zu einem erfindungsgemäßen textilen Flächengebilde verarbeitet bzw. zugeschnitten werden.

Nach dem Stand der Technik können dagegen Aktivkohlefaserflächengebilde, insbesondere Aktivkohlegewebe im allgemeinen nicht mit einer Bahnbreite über 120 cm gefertigt werden, was zu einer schlechten konfektionstechnischen Ausnutzung von zum Teil nur unter 60 % führt. Mit der vorliegenden Erfindung ist es nunmehr möglich, nutzbare Bahnbreiten in beliebiger Flächendimensionierung auch weit über 120 cm zu erzeugen, um den konfektionstechnischen Ausnutzungsgrad auf über 90 % zu steigern. Mit der erfindungsgemäßen Technologie ist es somit erstmals möglich, unter anderem Aktivkohlegewebe auf Aktivkohlefaserbasis in Bahnbreiten von über 120 cm und deutlich mehr zu fertigen.

Nach dem erfindungsgemäßen Verfahren werden also gemäß einer typischen Ausführungsform zwei oder aber auch mehr Bahnen von Aktivkohlefaserflächengebilden, insbesondere Aktivkohlegeweben, in einem Prozeß so zusammengeführt, daß eine nahtlose überbreite Bahnware entsteht; dies wird dadurch erreicht, daß die Bahnen entweder überlappend auf die Trägerschicht laminiert werden oder vor der Lamination so geschnitten werden, daß die Kanten nahtlos dicht aneinander bzw. bündig geführt werden.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Textiles Flächengebilde (1), insbesondere zum Schutz gegenüber biologischen und chemischen Schadstoffen und Giften, wie biologischen und chemischen Kampfstoffen, mit einer textilen Trägerschicht (2) und mit einem ersten Flächenstück (3) aus Aktivkohlefasern, welches auf die Trägerschicht (2) aufkaschiert ist,
wobei das Flächengebilde (1) außerdem ein zweites Flächenstück (4) aus Aktivkohlefasern aufweist, welches auf die Trägerschicht (2) aufkaschiert ist derart,
daß sich die jeweils benachbarten Ränder der beiden Flächenstücke (3, 4) berühren, wobei die jeweils benachbarten Ränder entlang der gesamten Berührungslänge bündig aneinander anliegen, oder
daß sich die jeweils benachbarten Ränder der beiden Flächenstücke (3, 4) entlang der gesamten Berührungslänge überlappen, wobei die beiden Flächenstücke (3, 4) zu jeweils 0,1 % bis 20 % ihrer jeweiligen Gesamtfläche miteinander überlappend auf die Trägerschicht (2) aufkaschiert sind, und
wobei die beiden Flächenstücke (3, 4) durch die Trägerschicht (2) miteinander verbunden sind.

2. Textiles Flächengebilde nach Anspruch 1, **dadurch gekennzeichnet, daß** die beiden Flächenstücke (3, 4) nur durch die Trägerschicht (2) miteinander verbunden sind.

3. Textiles Flächengebilde nach Anspruch 1, **dadurch gekennzeichnet, daß** die beiden Flächenstücke (3, 4) zusätzlich im Überlappungsbereich miteinander verbunden, insbesondere verklebt sind.

4. Textiles Flächengebilde nach einem oder mehreren der vorangehenden Ansprüche, **dadurch gekennzeichnet, daß** die beiden Flächenstücke (3, 4) nahtlos miteinander verbunden sind und/oder daß die beiden Flächenstücke (3, 4) zu jeweils 0,1 % bis 10 %, vorzugsweise 0,1 % bis 5 %, ihrer jeweiligen Gesamtfläche miteinander überlappend auf die Trägerschicht (2) aufkaschiert sind.

5. Textiles Flächengebilde nach einem oder mehreren der vorangehenden Ansprüche, **dadurch gekennzeichnet, daß** die beiden Flächenstücke (3, 4) mit der Trägerschicht (2) verklebt sind, insbesondere wobei die Verklebung jeweils durch einen diskontinuierlichen Klebstoffauftrag in Form von nichtzusammenhängenden Kleberpunkten erfolgt.

6. Textiles Flächengebilde nach einem oder mehreren der vorangehenden Ansprüche, **dadurch gekennzeichnet, daß** außerdem auf die der Trägerschicht (2) jeweils gegenüberliegenden Seiten des ersten und des zweiten Flächenstücks (3, 4) eine textile Abdeckschicht (5) aufkaschiert ist, insbesondere wobei die beiden Flächenstücke (3, 4) mit der Abdeckschicht (5) verklebt sind, vorzugsweise jeweils durch einen diskontinuierlichen Klebstoffauftrag in Form von nichtzusammenhängenden Kleberpunkten.

7. Textiles Flächengebilde nach Anspruch 6, **dadurch gekennzeichnet, daß** die beiden Flächenstücke (3, 4) zusätzlich durch die Abdeckschicht (5) miteinander verbunden sind.

8. Textiles Flächengebilde nach einem oder mehreren der Ansprüche 5 bis 7, **dadurch gekennzeichnet, daß** die beiden Flächenstücke (3, 4) jeweils, jeweils bezogen auf eine Seite der Flächenstücke (3, 4), zu höchstens 30 %, insbesondere zu höchstens 25 %, vorzugsweise zu höchstens 20 %, ganz besonders bevorzugt zu höchstens 15 %, mit Klebstoff bedeckt sind und/oder daß der Klebstoff die beiden Flächenstücke (3, 4) jeweils, jeweils bezogen auf eine Seite der Flächenstücke (3, 4), zu 5 bis 30 %, insbesondere 10 bis 25 %, vorzugsweise 10 bis 20 %, bedeckt.

9. Textiles Flächengebilde nach einem oder mehreren der Ansprüche 6 bis 9, **dadurch gekennzeichnet, daß** der Klebstoff, jeweils bezogen auf eine Seite der Flächenstücke (3, 4), mit einem Flächengewicht (Trockengewicht) von 5 bis 30 g/m², insbesondere 5 bis 25 g/m², vorzugsweise 10 bis 20 g/m², aufgetragen ist und/oder daß der Klebstoff auf die Flächenstücke (3, 4) und/oder die Trägerschicht (2) und/oder die Abdeckschicht (5) aufgedruckt ist, vorzugsweise in Form eines unregelmäßigen, insbesondere computerberechneten Rasters oder Musters derart, daß im Gebrauchszustand des textilen Flächengebildes (1) eine Gassenbildung vermieden wird, und/oder daß der Klebstoffauftrag durch eine Schablone aufgedruckt ist, deren lichter Durchmesser für den Klebstoffauftrag 50 bis 1.000 µm, insbesondere 100 bis 575 µm, vorzugsweise 100 bis 300 µm, beträgt.

10. Textiles Flächengebilde nach einem oder mehreren der Ansprüche 5 bis 9, **dadurch gekennzeichnet, daß** der Klebstoff ein thermoplastischer Klebstoff ist.

11. Textiles Flächengebilde nach einem oder mehreren der vorangehenden Ansprüche, **dadurch gekennzeichnet, daß** das erste und/oder das zweite Flächenstück (3, 4) ein Aktivkohlefaserflächengebilde ist, insbesondere mit einem Flächengewicht von 50 bis 250 g/m², insbesondere 50 bis 200 g/m², vorzugsweise 80 bis 180 g/m², besonders bevorzugt 90 bis 150 g/m², und/oder mit einer Dicke von 0,1 bis 10 mm, insbesondere 0,2 bis 0,8 mm, vorzugsweise 0,3 bis 0,5 mm, und/oder daß das erste und/oder das zweite Flächenstück (3, 4) ein Gewebe, Gewirke, Gestricke, Gelege, Vlies, Non-Woven oder Textilverbundstoff aus Aktivkohlefasern ist.

12. Textiles Flächengebilde nach einem oder mehreren der vorangehenden Ansprüche, **dadurch gekennzeichnet, daß** die Aktivkohlefasern des ersten und/oder des zweiten Flächenstücks (3, 4) aus carbonisierter und aktivierter Cellulose oder Viskose und/oder aus carbonisiertem oder aktiviertem Polyacrylnitril, vorzugsweise aus carbonisiertem und aktiviertem Polyacrylnitril, bestehen und/oder daß die Aktivkohlefasern des ersten und/oder des zweiten Flächenstücks (3, 4) nichtgesponnene Endlosfasern (Filamentfasern) sind.

13. Textiles Flächengebilde nach einem oder mehreren der vorangehenden Ansprüche, **dadurch gekennzeichnet, daß** die Aktivkohlefasern des ersten und/oder des zweiten Flächenstücks (3, 4) eine Feinheit, berechnet als Gewichtsangabe pro Länge (Titer), von mindestens 0,9 Denier, insbesondere von mindestens 1,0 Denier, vorzugsweise von mindestens 1,1 Denier, bevorzugt im Bereich von 0,8 bis 1,2 Denier, besonders bevorzugt im Bereich von 1,0 bis 1,2 Denier, aufweisen.

14. Textiles Flächengebilde nach einem oder mehreren der vorangehenden Ansprüche, **dadurch gekennzeichnet, daß** die Aktivkohlefasern des ersten und/oder des zweiten Flächenstücks (3, 4) einen Feuchtigkeitsgehalt von 5 bis 15 %, bezogen auf das Aktivkohlefasergewicht, aufweisen und/oder daß die Aktivkohlefasern des ersten und/oder des zweiten Flächenstücks (3, 4) eine Zugstärke bzw. Reißfestigkeit von mehr als 1,5 g/Denier, insbesondere von mehr als 1,6 g/Denier, vorzugsweise von mehr als 1,8 g/Denier, aufweisen und/oder daß die Aktivkohlefasern des ersten und/oder des zweiten Flächenstücks (3, 4) eine Bruchdehnung von mehr als 8 % aufweisen und/oder daß die Aktivkohlefasern des ersten und/oder des zweiten Flächenstücks (3, 4) ein längenbezogenes Gewicht im Bereich von 1,0 bis 2,0 g/m, insbesondere 1,2 bis 1,8 g/m, vorzugsweise 1,4 bis 1,6 g/m, aufweisen.

15. Textiles Flächengebilde nach einem oder mehreren der vorangehenden Ansprüche, **dadurch gekennzeichnet, daß** die Aktivkohlefasern des ersten und/oder des zweiten Flächenstücks (3, 4) nur schwer entflammbar sind, insbesondere einen Limited Oxygen Index (L.O.I.) von mindestens 50 % aufweisen, und/oder daß die Aktivkohlefasern des ersten und/oder des zweiten Flächenstücks (3, 4) eine Dichte von mindestens 1,2 g/cm³, insbesondere von mindestens 1,3 g/cm³, vorzugsweise von mindestens 1,4 g/cm³, und von bis zu 2,0 g/cm³ aufweisen.

16. Textiles Flächengebilde nach einem oder mehreren der vorangehenden Ansprüche, **dadurch gekennzeichnet, daß** die Aktivkohlefasern des ersten und/oder des zweiten Flächenstücks (3, 4) mit mindestens einem Katalysator imprägniert sind, insbesondere wobei als Katalysator Enzyme und/oder Metallionen, vorzugsweise Kupfer-, Silber-, Cadmium-, Platin-, Palladium-, Zink- und/oder Quecksilberionen, verwendet sind und/oder insbesondere wobei die Menge an Katalysator(en) 0,05 bis 12 Gew.-%, vorzugsweise 1 bis 10 Gew.-%, besonders bevorzugt 2 bis 8 Gew.-%, bezogen auf das Gewicht der Aktivkohlefasern, beträgt.

17. Textiles Flächengebilde nach einem oder mehreren der vorangehenden Ansprüche, **dadurch gekennzeichnet, daß** die Aktivkohlefasern des ersten und/oder des zweiten Flächenstücks (3, 4) eine innere Oberfläche (BET) der Aktivkohlefasern von mindestens 800 m²/g, insbesondere von mindestens 900 m²/g, vorzugsweise von mindestens 1.000 m²/g, bevorzugt im Bereich von 800 bis 2.000 g/m², insbesondere im Bereich 1.000 bis 1.500 g/m², aufweisen.

18. Textiles Flächengebilde nach einem oder mehreren der vorangehenden Ansprüche, **dadurch gekennzeichnet, daß** die Trägerschicht (2) und/oder die Abdeckschicht (5) als textile Schicht oder als textiles Flächengebilde ausgebildet sind, insbesondere als textiles Flächengebilde, vorzugsweise ausgewählt aus der Gruppe von textilen Geweben, Gewirken, Gestricken, Gelegen, Vliesen, Non-Wovens und Textilverbundstoffen, und/oder daß die Trägerschicht (2) und/oder die Abdeckschicht (5) ein Flächengewicht im Bereich von 10 bis 100 g/m², insbesondere 15 bis 75 g/m², vorzugsweise 20 bis 60 g/m², besonders bevorzugt 25 bis 50 g/m², aufweisen.

19. Textiles Flächengebilde nach einem oder mehreren der vorangehenden Ansprüche, **dadurch gekennzeichnet, daß** die Trägerschicht (2) und/oder die Abdeckschicht (5) gleiche oder unterschiedliche Flächengewichte aufweisen.

20. Textiles Flächengebilde nach einem oder mehreren der vorangehenden Ansprüche, **dadurch gekennzeichnet, daß** die Trägerschicht (2) und/oder das erste Flächenstück (3) und/oder das zweite Flächenstück (4) und/oder die Abdeckschicht (5) wasser- und wasserdampfdurchlässig sowie gasdurchlässig, insbesondere luftdurchlässig, sind und/oder daß das textile Flächengebilde (1) insgesamt wasser- und wasserdampfdurchlässig sowie gasdurchlässig, insbesondere luftdurchlässig, ist.

21. Schutzmaterialien, insbesondere Schutzanzüge, Schutzhandschuhe, Schutzschuhe, Schutzbekleidungsstücke, Schutzabdeckungen und Schlafsäcke, hergestellt unter Verwendung eines textilen Flächengebildes (1) nach einem der vorangehenden Ansprüche und/oder aufweisend ein textiles Flächengebilde (1) nach einem der vorangehenden Ansprüche.

22. Verwendung eines textilen Flächengebildes (1) nach einem der vorangehenden Ansprüche zur Herstellung von Schutzmaterialien aller Art, insbesondere von Schutzanzügen, Schutzhandschuhen, Schutzschuhen und anderen Schutzbekleidungsstücken und von Schutzabdeckungen und Schlafsäcken, insbesondere für zivile und militärische Zwecke, vorzugsweise für den ABC-Einsatz.

23. Verfahren zur Herstellung eines insbesondere nach einem der vorangehenden Ansprüche ausgebildeten textilen Flächengebildes, insbesondere zum Schutz gegenüber biologischen und chemischen Schadstoffen und Giften, wie biologischen und chemischen Kampfstoffen, wobei ein erstes bahnförmiges Flächengebilde aus Aktivkohlefasern hergestellt und auf eine textile Trägerschicht aufkaschiert wird,
wobei ein zweites bahnförmiges Flächengebilde aus Aktivkohlefasern hergestellt und auf die textile Trägerschicht quer zur Längsersteckung versetzt zum ersten bahnförmigen Flächengebilde aufkaschiert wird,
so daß sich die jeweils benachbarten Längsränder der beiden bahnförmigen Flächengebilde berühren, wobei die jeweils benachbarten Längsränder entlang der gesamten Berührungslänge bündig aneinander anliegen, oder
so daß sich die jeweils benachbarten Längsränder der beiden bahnförmigen Flächengebilde entlang der gesamten Berührungslänge überlappen, wobei die beiden Flächengebilde zu jeweils 0,1 % bis 20 % ihrer jeweiligen Gesamtfläche miteinander überlappend auf die Trägerschicht aufkaschiert werden, und
wobei die beiden bahnförmigen Flächengebilde durch die textile Trägerschicht miteinander verbunden werden.

## Claims

1. A textile fabric (1), in particular for protection against biological and chemical noxious substances and toxins, such as biological and chemical warfare agents, comprising a textile carrier layer (2) and a first sheet-like piece (3) made of activated carbon fibres, which is laminated onto the carrier layer (2),
the fabric (1) further comprising a second sheet-like piece (4) made of activated carbon fibres, which is laminated onto the carrier layer (2) in such a way
that the respective adjacent edges of the two sheet-like pieces (3, 4) touch each other, the respective adjacent edges lying flush against each other along the entire contact length, or
that the respective adjacent edges of the two sheet-like pieces (3, 4) overlap each other along the entire contact length, the two sheet-like pieces (3, 4) being laminated onto the carrier layer (2) so as to be overlapping over 0.1% to 20% of their respective total areas, and
the two sheet-like pieces (3, 4) being interconnected by the carrier layer (2).

2. The textile fabric according to claim 1, **characterised in that** the two sheet-like pieces (3, 4) are interconnected only by the carrier layer (2).

3. The textile fabric according to claim 1, **characterised in that** the two sheet-like pieces (3, 4) are additionally interconnected in the overlapping region, in particular adhesively bonded.

4. The textile fabric according to one or more of the preceding claims, **characterised in that** the two sheet-like pieces (3, 4) are seamlessly interconnected and/or **in that** the two sheet-like pieces (3, 4) are laminated onto the carrier layer (2) so as to be overlapping over 0.1% to 10%, preferably 0.1% to 5%, of their respective total areas.

5. The textile fabric according to one or more of the preceding claims, **characterised in that** the two sheet-like pieces (3, 4) are adhesively bonded to the carrier layer (2), the adhesive bonding in particular taking place in each case by means of a discontinuous application of adhesive in the form of non-contiguous adhesive dots.

6. The textile fabric according to one or more of the preceding claims, **characterised in that**, in addition, a textile cover layer (5) is laminated onto the respective sides of the first and second sheet-like pieces (3, 4) that face the carrier layer (2), the two sheet-like pieces (3,4) in particular being adhesively bonded to the cover layer (5), preferably in each case by means of a discontinuous application of adhesive in the form of non-contiguous adhesive dots.

7. The textile fabric according to claim 6, **characterised in that** the two sheet-like pieces (3, 4) are additionally interconnected by the cover layer (5).

8. The textile fabric according to one or more of claims 5 to 7, **characterised in that** the two sheet-like pieces (3, 4) are each covered with adhesive by at most 30%, in particular at most 25%, preferably at most 20%, most preferably at most 15%, in each case based on one side of the sheet-like pieces (3, 4), and/or **in that** the adhesive covers 5 to 30%, in particular 10 to 25%, preferably 10 to 20%, of each of the two sheet-like pieces (3, 4), in each case based on one side of the sheet-like pieces (3, 4).

9. The textile fabric according to one or more of claims 6 to 9, **characterised in that**, in each case based on one side of the sheet-like pieces (3, 4), the adhesive is applied to a weight per unit area (dry weight) of 5 to 30 g/m², in particular 5 to 25 g/m², preferably 10 to 20 g/m², and/or **in that** the adhesive is printed onto the sheet-like pieces (3, 4) and/or the carrier layer (2) and/or the cover layer (5), preferably in the form of an irregular, in particular computer-calculated, grid or pattern such that channel formation is avoided when the textile fabric (1) is in use, and/or **in that** the adhesive application is printed on by means of a template, the clear diameter of which for the adhesive application is 50 to 1,000 µm, in particular 100 to 575 µm, preferably 100 to 300 µm.

10. The textile fabric according to one or more of claims 5 to 9, **characterised in that** the adhesive is a thermoplastic adhesive.

11. The textile fabric according to one or more of the preceding claims, **characterised in that** the first and/or the second sheet-like piece (3, 4) is an activated carbon fibre fabric, in particular having a weight per unit area of 50 to 250 g/m², in particular 50 to 200 g/m², preferably 80 to 180 g/m², particularly preferably 90 to 150 g/m², and/or a thickness of 0.1 to 10 mm, in particular 0.2 to 0.8 mm, preferably 0.3 to 0.5 mm, and/or **in that** the first and/or the second sheet-like piece (3, 4) is a woven fabric, a warp-knitted fabric, a weft-knitted fabric, a lattice, a fleece, a non-woven fabric or a textile composite of activated carbon fibres.

12. The textile fabric according to one or more of the preceding claims, **characterised in that** the activated carbon fibres of the first and/or the second sheet-like piece (3, 4) consist of carbonised and activated cellulose or viscose and/or carbonised or activated polyacrylonitrile, preferably of carbonised and activated polyacrylonitrile, and/or **in that** the activated carbon fibres of the first and/or the second sheet-like piece (3, 4) are non-spun continuous filaments (filament fibres).

13. The textile fabric according to one or more of the preceding claims, **characterised in that** the activated carbon fibres of the first and/or the second sheet-like piece (3, 4) have a fineness, calculated as weight per length (titre), of at least 0.9 denier, in particular at least 1.0 denier, preferably at least 1.1 denier, preferably in the range of 0.8 to 1.2 denier, more preferably in the range of 1.0 to 1.2 denier.

14. The textile fabric according to one or more of the preceding claims, **characterised in that** the activated carbon fibres of the first and/or the second sheet-like piece (3, 4) have a moisture content of 5 to 15% based on the active carbon fibre weight, and/or **in that** the activated carbon fibres of the first and/or the second sheet-like piece (3, 4) have a tensile strength or tear resistance of more than 1.5 g/denier, in particular more than 1.6 g/denier, preferably more than 1.8 g/denier and/or **in that** the activated carbon fibres of the first and/or the second sheet-like piece (3, 4) have an elongation at break of more than 8% and/or **in that** the activated carbon fibres of the first and/or the second sheet-like piece (3, 4) have a weight per unit length in the range of 1.0 to 2.0 g/m, in particular 1.2 to 1.8 g/m, preferably 1.4 to 1.6 g/m.

15. The textile fabric according to one or more of the preceding claims, **characterised in that** the activated carbon fibres of the first and/or the second sheet-like piece (3, 4) are poorly inflammable, in particular having a Limited Oxygen Index (LOI) of at least 50%, and/or **in that** the activated carbon fibres of the first and/or the second sheet-like piece (3, 4) have a density of at least 1.2 g/cm³, in particular at least 1.3 g/cm³, preferably at least 1.4 g/cm³, and of up to 2.0 g/cm³.

16. The textile fabric according to one or more of the preceding claims, **characterised in that** the activated carbon fibres of the first and/or the second sheet-like piece (3, 4) are impregnated with at least one catalyst, in particular enzymes and/or metal ions, preferably copper ions, silver ions, cadmium ions, platinum ions, palladium ions, zinc ions and/or mercury ions, being used as the catalyst, and/or the amount of catalyst(s) based on the weight of the activated carbon fibres in particular being 0.05 to 12 wt%, preferably 1 to 10 wt%, particularly preferably 2 to 8 wt%.

17. The textile fabric according to one or more of the preceding claims, **characterised in that** the activated carbon fibres of the first and/or the second sheet-like piece (3, 4) have an inner surface area (BET) of the activated carbon fibres of at least 800 m²/g, in particular at least 900 m²/g, preferably at least 1,000 m²/g, preferably in the range of 800 to 2,000 g/m², in particular in the range of 1,000 to 1,500 g/m².

18. The textile fabric according to one or more of the preceding claims, **characterised in that** the carrier layer (2) and/or the cover layer (5) are formed as a textile layer or as a textile fabric, in particular as a textile fabric, preferably selected from the group of textile woven fabrics, warp-knitted fabrics, weft-knitted fabrics, lattices, fleeces, non-woven fabrics or textile composites, and/or **in that** the carrier layer (2) and/or the cover layer (5) have a weight per unit area in the range of 10 to 100 g/m², in particular 15 to 75 g/m², preferably 20 to 60 g/m², particularly preferably 25 to 50 g/m².

19. The textile fabric according to one or more of the preceding claims, **characterised in that** the carrier layer (2) and/or the cover layer (5) have the same or different weights per unit area.

20. The textile fabric according to one or more of the preceding claims, **characterised in that** the carrier layer (2) and/or the first sheet-like piece (3) and/or the second sheet-like piece (4) and/or the cover layer (5) are permeable to water and water vapour as well permeable to gas, in particular permeable to air, and/or **in that** the textile fabric (1) is overall permeable to water and water vapour and permeable to gas, in particular permeable to air.

21. Protective materials, in particular protective suits, protective gloves, protective footwear, protective clothing, protective covers and sleeping bags, produced using a textile fabric (1) according to one of the preceding claims and/or comprising a textile fabric (1) according to one of the preceding claims.

22. A use of a textile fabric (1) according to one of the preceding claims for the production of protective materials of all kinds, in particular protective suits, protective gloves, protective shoes and other protective clothing, and protective covers and sleeping bags, in particular for civilian and military purposes, preferably for CBRN applications.

23. A method for the production of a textile fabric in particular designed according to one of the preceding claims, in particular for protection against biological and chemical noxious substances and toxins, such as biological and chemical warfare agents, wherein a first web-like fabric made of activated carbon fibres is produced and laminated onto a textile carrier layer,
wherein a second web-like fabric made of activated carbon fibres is produced and laminated onto the textile carrier layer in a manner offset from the first web-like fabric transversely to the longitudinal extension,
such that the respective adjacent longitudinal edges of the two web-like fabrics touch, wherein the respective adjacent longitudinal edges lie flush against each other along the entire contact length, or
such that the respective adjacent longitudinal edges of the two web-like fabrics overlap along the entire contact length, wherein the two fabrics are laminated onto the carrier layer in a manner so as to be overlapping over 0.1% to 20% of their respective total areas, and
wherein the two web-like fabrics are interconnected by the textile carrier layer.

## Revendications

1. Tissu textile (1), notamment pour la protection contre les polluants biologiques et chimiques et les poisons, tels que les agents de guerre biologiques et chimiques, avec une couche de support en textile (2) et avec une première pièce de surface (3) en fibres de charbon actif laminée sur la couche de support (2),
dans lequel le tissu (1) comprend en outre une deuxième pièce de surface (4) en fibres de charbon actif qui est laminée sur la couche de support (2) de telle sorte que
les bords adjacents respectifs des deux pièces de surface (3, 4) se touchent, les bords adjacents respectifs affleurant les uns contre les autres sur toute la longueur du contact ou
que les bords adjacents respectifs des deux pièces de surface (3, 4) se chevauchent sur toute la longueur du contact, les deux pièces de surface (3, 4) étant laminées sur la couche de support (2) avec un chevauchement sur 0,1 % à 20 % de leur surface totale respective et
dans lequel les deux pièces de surface (3, 4) sont connectées l'une à l'autre par la couche de support (2).

2. Tissu textile selon la revendication 1, **caractérisé en ce que** les deux pièces de surface (3, 4) ne sont reliées l'une à l'autre que par la couche de support (2).

3. Tissu textile selon la revendication 1, **caractérisé en ce que** les deux pièces de surface (3, 4) sont en outre reliées l'une à l'autre dans la zone de chevauchement, en particulier collées.

4. Tissu textile selon une ou plusieurs des revendications précédentes, **caractérisé en ce que** les deux pièces de surface (3, 4) sont reliées l'une à l'autre sans couture et/ou **en ce que** les deux pièces de surface (3, 4) sont chacune laminées sur la couche de support (2) avec un chevauchement l'une sur l'autre sur 0,1 % à 10 %, de préférence sur 0,1 % à 5 % de leur surface totale respective.

5. Tissu textile selon une ou plusieurs des revendications précédentes, **caractérisé en ce que** les deux pièces de surface (3, 4) sont collées à la couche de support (2), en particulier **en ce que** le collage a lieu chaque fois par une application discontinue d'adhésif sous la forme de points d'adhésif non contigus.

6. Tissu textile selon une ou plusieurs des revendications précédentes, **caractérisé en ce que**, en outre, sur la face respective des première et deuxième pièces de surface (3, 4) opposée à la couche de support (2) une couche de couverture textile (5) est laminée, en particulier dans lequel la couche de couverture (5) est collée sur les deux pièces de surface (3, 4), de préférence dans chaque cas par une application discontinue d'adhésif sous la forme de points d'adhésif non contigus.

7. Tissu textile selon la revendication 6, **caractérisé en ce que** les deux pièces de surface (3, 4) sont reliées l'une à l'autre en outre par la couche de couverture (5).

8. Tissu textile selon une ou plusieurs des revendications 5 à 7, **caractérisé en ce que** les deux pièces de surface (3, 4) sont chacune couvertes de l'adhésif, chaque fois au plus à 30 %, en particulier au plus à 25 %. de préférence au maximum à 20 %, le plus préférablement au maximum à 15 % d'une face de la pièce de surface (3, 4), et/ou **en ce que** l'adhésif couvre chacune des deux pièces de surface (3, 4), chaque fois de 5 à 30 %, en particulier 10 à 25 %, de préférence 10 à 20 %, d'une face des pièces de surface (3, 4).

9. Tissu textile selon une ou plusieurs des revendications 6 à 9, **caractérisé en ce que** l'adhésif est appliqué avec une masse surfacique (poids sec) allant de 5 à 30 g/m², en particulier de 5 à 25 g/m², de préférence 10 à 20 g/m², chaque fois sur une face des pièces de surface (3, 4) et/ou **en ce que** l'adhésif est imprimé sur les pièces de surface (3, 4) et/ou la couche de support (2) et/ou la couche de couverture (5), de préférence sous la forme d'une grille ou d'un motif irrégulier, en particulier calculé par ordinateur, de sorte que, lors de l'utilisation du tissu textile (1), on évite la formation de gaz et/ou que l'application d'adhésif soit imprimée par un gabarit, dont le diamètre intérieur pour l'application de l'adhésif est compris entre 50 et 1000 µm, en particulier 100 à 575 µm, de préférence 100 à 300 µm.

10. Tissu textile selon une ou plusieurs des revendications 5 à 9, **caractérisé en ce que** l'adhésif est un adhésif thermoplastique.

11. Tissu textile selon une ou plusieurs des revendications précédentes, **caractérisé en ce que** la première et/ou la deuxième pièce de surface (3, 4) est un tissu en fibres de charbon actif, en particulier d'un poids surfacique allant de 50 à 250 g/m², en particulier de 50 à 200 g/m², de préférence 80 à 180 g/m², de manière particulièrement préférée 90 à 150 g/m² et/ou avec une épaisseur allant de 0,1 à 10 mm, en particulier de 0,2 à 0,8 mm, de préférence 0,3 à 0,5 mm, et/ou **en ce que** la première et/ou la deuxième pièce de surface (3, 4) est un tissu, tissu à mailles, tricot, nappe, voile, non tissé ou composite textile de fibres de charbon actif.

12. Tissu textile selon une ou plusieurs des revendications précédentes, **caractérisé en ce que** les fibres de charbon actif de la première et/ou de la deuxième pièce de surface (3, 4) consistent en de la cellulose ou viscose carbonisée et activée et/ou en du polyacrylonitrile carbonisé ou activé, de préférence en du polyacrylonitrile carbonisé et activé et/ou **en ce que** les fibres de charbon actif de la première et/ou de la deuxième pièce de surface (3, 4) sont des filaments non filés (fibres de filament).

13. Tissu textile selon une ou plusieurs des revendications précédentes, **caractérisé en ce que** les fibres de charbon actif de la première et/ou de la deuxième pièce de surface (3, 4) ont une finesse, calculée en poids par longueur (titre), d'au moins 0,9 denier, en particulier d'au moins 1,0 denier, de préférence au moins 1,1 denier, préférablement dans la gamme de 0,8 à 1,2 denier, de manière davantage préférée dans la gamme de 1,0 à 1,2 denier.

14. Tissu textile selon une ou plusieurs des revendications précédentes, **caractérisé en ce que** les fibres de charbon actif de la première et/ou de la deuxième pièce de surface (3, 4) ont une teneur en humidité de 5 à 15 % par rapport au poids de fibres de charbon actif et/ou **en ce que** les fibres de charbon actif de la première et/ou la deuxième pièce de surface (3, 4) ont une résistance à la traction ou résistance au déchirement supérieure à 1,5 g/denier, en particulier supérieure à 1,6 g/denier, de préférence supérieure à 1,8 g/denier et/ou **en ce que** les fibres de charbon actif de la première et/ou de la deuxième pièce de surface (3, 4) ont un allongement à la rupture supérieur à 8 % et/ou **en ce que** les fibres de charbon actif de la première et/ou de la deuxième pièce de surface (3, 4) ont un poids en fonction de la longueur situé dans la plage allant de 1,0 à 2,0 g/m, en particulier de 1,2 à 1,8 g/m, de préférence de 1,4 à 1,6 g/m.

15. Tissu textile selon une ou plusieurs des revendications précédentes, **caractérisé en ce que** les fibres de charbon actif de la première et/ou de la deuxième pièce de surface (3, 4) sont difficilement inflammables, en particulier ont un indice d'oxygène limité (LOI) d'au moins 50 % et/ou **en ce que** les fibres de charbon actif de la première et/ou de la deuxième pièce de surface (3, 4) ont une densité d'au moins 1,2 g/cm³, en particulier d'au moins 1,3 g/cm³, de préférence d'au moins 1,4 g/cm³ et jusqu'à 2,0 g/cm³.

16. Tissu textile selon une ou plusieurs des revendications précédentes, **caractérisé en ce que** les fibres de charbon actif de la première et/ou de la deuxième pièce de surface (3, 4) sont imprégnées d'au moins un catalyseur, notamment dans lequel, en tant que catalyseur, on utilise des enzymes et/ou des ions métalliques, de préférence des ions cuivre, argent, cadmium, platine, palladium, zinc et/ou mercure et/ou en particulier, la quantité de catalyseur(s) étant comprise entre 0,05 et 12 % en poids, de préférence entre 1 et 10 % en poids, de manière particulièrement préférée de 2 à 8 % en poids, par rapport au poids des fibres de charbon actif.

17. Tissu textile selon une ou plusieurs des revendications précédentes, **caractérisé en ce que** les fibres de charbon actif de la première et/ou de la deuxième pièce de surface (3, 4) présentent une surface interne (BET) des fibres de charbon actif d'au moins 800 m²/g, en particulier d'au moins 900 m²/g, de préférence d'au moins 1000 g/m², de préférence dans la plage de 800 à 2000 g/m², en particulier dans la plage de 1000 à 1500 g/m².

18. Tissu textile selon une ou plusieurs des revendications précédentes, **caractérisé en ce que** la couche de support (2) et/ou la couche de couverture (5) sont formées en tant que couche textile ou en tant que tissu textile, en particulier en tant que tissu textile, de préférence choisi dans le groupe des tissus textiles, tissus à mailles, tricots, nappes, voiles, non-tissés et composites textiles et/ou **en ce que** la couche de support (2) et/ou la couche de couverture (5) présentent un poids surfacique compris dans la plage allant de 10 à 100 g/m², en particulier de 15 à 75 g/m², de préférence 20 à 60 g/m², de manière particulièrement préférée 25 à 50 g/m².

19. Tissu textile selon une ou plusieurs des revendications précédentes, **caractérisé en ce que** la couche de support (2) et/ou la couche de couverture (5) ont des masses surfaciques identiques ou différentes.

20. Tissu textile selon une ou plusieurs des revendications précédentes, **caractérisé en ce que** la couche de support (2) et/ou la première pièce de surface (3) et/ou la deuxième pièce de surface (4) et/ou la couche de couverture (5) sont perméables à l'eau et à la vapeur d'eau, perméables aux gaz, notamment perméables à l'air et/ou **en ce que** le tissu textile (1) est globalement perméable à l'eau et à la vapeur d'eau ainsi que perméable aux gaz, en particulier perméable à l'air.

21. Matériels de protection, en particulier combinaisons de protection, gants de protection, chaussures de protection, pièces de vêtement de protection, housses de protection et sacs de couchage, fabriqués à l'aide d'un tissu textile (1) selon l'une des revendications précédentes et/ou comprenant un tissu textile (1) selon l'une des revendications précédentes.

22. Utilisation d'un tissu textile (1) selon l'une des revendications précédentes pour la fabrication de matériaux de protection de tous types, en particulier combinaisons de protection, gants de protection, chaussures de protection et autres pièces de vêtement de protection, housses de protection et sacs de couchage, en particulier à usage civil et militaire, de préférence à usage ABC.

23. Procédé de fabrication d'un tissu textile, en particulier conçu selon l'une des revendications précédentes, en particulier pour la protection contre les polluants biologiques et chimiques et les poisons, tels que les agents de guerre biologiques et chimiques, dans lequel un premier tissu en forme de bande est préparé à partir de fibres de charbon actif et est laminé sur une couche de support textile,
dans lequel un deuxième tissu en forme de bande est préparé à partir de fibres de charbon actif et laminé sur la couche de support textile transversalement au sens longitudinal, décalé par rapport au premier tissu en forme de bande,
de sorte que les bords longitudinaux adjacents respectifs des deux tissus en forme de bande se touchent, les bords longitudinaux adjacents respectifs affleurant l'un à l'autre le long de la longueur de contact ou
de sorte que les bords longitudinaux adjacents respectifs des deux tissus en forme de bande se chevauchent sur toute la longueur du contact, les deux tissus étant laminés sur la couche de support avec un chevauchement l'un sur l'autre de 0,1 % à 20 % de leur surface totale respective et
dans lequel les deux tissus en forme de bande sont connectés l'un à l'autre par la couche de support textile.
